**Europäisches Patentamt**

**European Patent Office**

**Office européen des brevets**

(19)

(11) Veröffentlichungsnummer: **0 136 973**
**A1**

(12) # EUROPÄISCHE PATENTANMELDUNG

(21) Anmeldenummer: **84810377.6**

(22) Anmeldetag: **01.08.84**

(51) Int. Cl.⁴: **C 02 F 1/72**

(30) Priorität: **09.08.83 CH 4339/83**

(43) Veröffentlichungstag der Anmeldung:
**10.04.85 Patentblatt 85/15**

(84) Benannte Vertragsstaaten:
**AT CH DE FR IT LI**

(71) Anmelder: **Strausak, Benedikt**
**Merianweg 19**
**CH-3400 Burgdorf(CH)**

(72) Erfinder: **Strausak, Benedikt**
**Merianweg 19**
**CH-3400 Burgdorf(CH)**

(74) Vertreter: **Schoch, Willy et al,**
**Bovard AG Patentanwälte VSP Optingenstrasse 16**
**CH-3000 Bern 25(CH)**

(54) **Zusammensetzung zur Aufbereitung und Entkeimung von Gebrauchswasser und ihre Verwendung.**

(57) Es wird eine Zusammensetzung zur chemischen Aufbereitung von Wasser, insbesondere zum Entkeimen und zur Oxidation von oxidierbaren Verunreinigungen in Schwimmbädern, beschrieben. Die Zusammensetzung enthält mindestens eine Peroxyverbindung, mindestens ein Borat oder eine Borsäure und mindestens einen Chelatbildner oder einen Zeolith.

Croydon Printing Company Ltd

0136973

Zusammensetzung zur Aufbereitung und Entkeimung
von Gebrauchswasser und ihre Verwendung

---

Die Erfindung betrifft eine Zusammensetzung zur Aufbereitung und Entkeimung von Gebrauchswasser, insbesondere zur
Desinfektion von Schwimmbädern. Sie betrifft ebenfalls deren
Verwendung zur Aufbereitung von Gebrauchswasser.

Es ist seit langem bekannt, Gebrauchswasser, wie
Schwimmbadwasser, durch Chlor freisetzende Mittel zu desinfizieren. Die Chlorierung weist aber verschiedene schwerwiegende Nachteile, wie Geruchsbildung, Schleimhautreizung und Bildung von toxischen Verbindungen auf. Auch die anderen bekannten halogenhaltigen Desinfektionsmittel weisen ähnliche Nachteile auf. In neuerer Zeit wurden anorganische Perverbindungen und Ozon als Wasserbehandlungsmittel zur Desinfektion von
Schwimmbädern verwendet. Auch die Behandlung mit Ozon ist
nicht problemfrei, da in Schwimmbädern eine zusätzliche Verwendung von Halogenen oder Halogenverbindungen erforderlich
ist. Den Perverbindungen haftet der Nachteil an, dass sie unter den praktischen Bedingungen relativ rasch zerfallen und
mit Spuren von Schwermetallen, insbesondere Kupfer, Mangan
und Eisen, grüne, bräunlichgelbe oder bräunliche Kolloide bilden, die dem Wasser, vorallem dem Badewasser, eine unansehnliche Farbe verleihen.

Ein taugliches Verfahren zur chemischen Aufbereitung
und Entkeimung von Wasser ist in der EP-A-0 059 978 beschrieben. Dort werden Zusammensetzungen verwendet, die neben Peroxidverbindungen quarternäre Ammoniumverbindungen und wasserlösliche Kupfer- und/oder Silbersalze enthalten. Dieses Verfahren ist wirkungsvoll, hat aber den Nachteil, dass die genannte Verfärbung des Schwimmbadwassers schon nach einem Monat auftritt.

Es wurde nun ein Mittel gefunden, das den genannten Nachteil nicht aufweist und während wesentlich längerer Zeit klares Schwimmbadwasser gewährleistet.

Gegenstand der vorliegenden Erfindung ist somit eine Zusammensetzung zur chemischen Aufbereitung von Wasser, insbesondere von Schwimmbadwasser, wie sie im Anspruch 1 beschrieben ist.

Beispiele der Peroxyverbindung A) sind Alkalipersulfate, wie Kalium- und Natriumpersulfat, Natriumperborattetrahydrat $NaBO_3 \cdot 4H_2O$, Natriumperboratmonohydrat $NaBO_3 \cdot H_2O$, Calciumperborat $Ca(BO_3)_2 \cdot xH_2O$, Natriumpercarbonat $2Na_2CO_3 \cdot 3H_2O$, Tripelsalz der Carosäure, wie $2KHSO_5 \cdot KHSO_4 \cdot K_2SO_4$ und Peroxyphosphate, wie $Na_3PO_5$.

Beispiele für die Komponente B) sind Borsäure, Alkaliborate oder Perborate.

Beispiele für die Komponente C) sind die schwermetallkomplexierenden Verbindungen Nitrilotriessigsäure NTA, Ethylendiamintetraessigsäure EDTA, Cyclohexandiamintetraessigsäure DCTA, Diethylentriaminpentaessigsäure DTPA, Glykoletherdiamintetraessigsäure EGTA.

Die Menge des Komplexbildners kann variiert werden, je nach der vorhandenen Menge an Schwermetallen, wie Kupfer, Mangan oder Eisen, wobei angestrebt werden sollte, dass pro mol Schwermetall ebenfalls 1 mol Komplexbildner zur Verfügung steht. Beispiele für Zeolithe sind die Montmarillonite, Natrolith und Analcim.

Die Borate oder Borsäuren sind in stabilisierenden Mengen vorhanden, vorzugsweise 0,01 - 1 mol pro mol Perverbindung.

Bei den Chelatbildnern haben sich in der Praxis Mengen von 0,01 - 1 mol pro mol Perverbindung als zweckmässig erwiesen.

Vorzugsweise enthält die erfindungsgemässe Zusammensetzung Aluminiumsulfat als Flockungsmittel zur Entfernung allfälliger, das Wasser vorbelastender Schwebestoffe.

Es empfiehlt sich, quartäre Ammoniumverbindungen als zusätzliche Desinfektionsmittel zuzusetzen.

Gegenstand der Erfindung ist ebenfalls die Verwendung der erfindungsgemässen Zusammensetzung zum Aufbereiten von Wasser, indem dem Wasser ein wirksamer Anteil der Zusammensetzung zugesetzt wird.

Die erfindungsgemässe Verwendung bezieht sich vorzugsweise auf Schwimmbadwasser; sie bezieht sich aber auch auf industrielle Gebrauchswasser, wie Kühlwasser, die ebenfalls erfolgreich von bakteriellen Verunreinigungen befreit werden können.

Durch die erfindungsgemässen stabilisierten Zusammensetzungen wird ein zu rascher Zerfall an der Perverbindung vermieden. Der zu rasche Zerfall wird auch dadurch gehemmt dass Schwermetallionen, welche normalerweise die Zersetzung von Peroxiden katalysieren, durch die Chelatbildner maskiert werden. Zusätzlich verhindert die Maskierung die Entstehung gefärbter kolloidaler Schwermetallverbindungen. Die erfindungsgemässe Zusammensetzung kann als Mischung in Pulverform oder aber auch in Tablettenform in den Handel gebracht werden.

Das folgende Beispiel dient zur Erläuterung der Erfindung.

Beispiel 1

Zusammensetzung zur Aufbereitung von 100 m$^3$ Wasser:

2 kg Kaliumpersulfat $K_2S_2O_8$ (ca. 8 mol)

150 g Borax $Na_2B_2O_7 \cdot CH_2O$ (ca. 0,4 mol)

140 g EDTA (ca. 0,4 mol)

Patentansprüche

1.    Zusammensetzung zur chemischen Aufbereitung von Wasser, insbesondere zum Entkeimen und zur Oxidation von oxidierbaren Verunreinigungen im Schwimmbadwasser, dadurch gekennzeichnet, dass die Zusammensetzung eine Kombination, bestehend aus

A) mindestens einer Peroxyverbindung,

B) mindestens einem Borat   oder einer Borsäure, und

C) mindestens einem Chelatbildner oder einem Zeolith enthält.


2.    Zusammensetzung nach Anspruch 1, dadurch gekennzeichnet, dass die Komponente A) ein Alkalipersulfat wie $K_2S_2O_8$
oder $Na_2S_2O_8$ ist.


3.    Zusammensetzung nach Anspruch 1, dadurch gekennzeichnet, dass die Komponente A) und/oder B) ein Natriumperborat-
Monohydrat ist.


4.    Zusammensetzung nach Anspruch 1 oder 2, dadurch gekennzeichnet, dass die Komponente B) ein Alkaliborat oder
Borsäure ist.


5.    Zusammensetzung nach einem der Ansprüche 1 - 4, dadurch gekennzeichnet, dass die Komponente C) Nitrilotriessigsäure, Ethylendiamintetraessigsäure, Cyclohexandiamintetraessigsäure, Diethylentriaminpentaessigsäure oder Glykoletherdiamintetraessigsäure ist.


6.    Zusammensetzung nach Anspruch 5, dadurch gekennzeichnet, dass die Komponente C) Ethylendiamintetraessigsäure ist.

7.      Zusammensetzung nach einem der Ansprüche 1 - 6, dadurch gekennzeichnet, dass sie zusätzlich Aluminiumsulfat als Flockungsmittel enthält.

8.      Zusammensetzung nach einem der Ansprüche 1 - 7, dadurch gekennzeichnet, dass sie eine quartäre Ammoniumverbindung enthält.

9.      Zusammensetzung nach einem der Ansprüche 1 - 8, dadurch gekennzeichnet, dass das Molverhältnis A) zu B) zu C) 100 : (1 bis 100) : (1 bis 100), vorzugsweise 100 : (1 bis 10): (1 bis 10) beträgt.

10.     Verwendung der Zusammensetzung gemäss Anspruch 1 zum Aufbereiten von Wasser, indem dem Wasser ein wirksamer Anteil der Zusammensetzung gemäss Anspruch 1 zugesetzt wird.

11.     Verwendung nach Anspruch 10, worin eine Zusammensetzung nach einem der Ansprüche 2 - 9 eingesetzt wird.

12.     Verwendung nach Anspruch 10 oder 11 zum Entkeimen von Schwimmbadwasser.

# EUROPÄISCHER RECHERCHENBERICHT

**0136973**

Nummer der Anmeldung

EP 84 81 0377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | FR-A-2 222 427 (AMERICAN CYANAMID) <br> * Seite 5, Zeile 16 - Seite 6, Zeile 37 * | 1-12 | C 02 F 1/72 |
| Y | FR-A-2 193 875 (INTEROX) <br> * Seite 2, Zeile 24 - Seite 3, Zeile 22 * | 1-12 | |
| Y | DE-A-1 815 170 (DU PONT DE NEMOURS) <br> * Seite 3, Absatz 2 - Seite 6, Absatz 1; Seite 7, Absatz 2 - Seite 9, Absatz 1 * | 1-12 | |
| A | EP-A-0 059 978 (BAYROL) <br> * Ansprüche 1-6 * | 1,2,8 | RECHERCHIERTE SACHGEBIETE (Int. Cl.4) |
| A | FR-A-2 327 202 (TOKAI DENKA KOGYO K.K.) <br> * Seite 13 * | 1,7 | C 02 F |
| A | DE-A-2 141 529 (H. HEIDENREICH) <br> * Ansprüche * | 1 | |

Der vorliegende Recherchenbericht wurde für alle Patentansprüche erstellt.

| Recherchenort | Abschlußdatum der Recherche | Prüfer |
|---|---|---|
| DEN HAAG | 27-11-1984 | VAN AKOLEYEN H.T.M. |